# FASCICULE DE BREVET EUROPEEN

(11) **EP 1 609 117 B1**
(45) Date de publication et mention de la délivrance du brevet: **15.07.2009**
(21) Numéro de dépôt: 04742381.9
(22) Date de dépôt: 26.03.2004
(51) Int. Cl.: G06K 19/077

(54) **PROCEDE DE FABRICATION D'ANTENNE DE CARTE A PUCE SUR UN SUPPORT THERMOPLASTIQUE ET CARTE A PUCE AINSI OBTENUE**
VERFAHREN ZUR HERSTELLUNG EINER CHIPKARTEN-ANTENNE AUF EINEM THERMOPLASTISCHEN TRÄGER UND EINER DANACH HERGESTELLTEN CHIPKARTE
METHOD FOR MAKING A SMART CARD ANTENNA ON A THERMOPLASTIC SUPPORT AND RESULTING SMART CARD

(30) Priorité: 28.03.2003 FR 0303817
(43) Date de publication de la demande: 28.12.2005
(73) Titulaire: ASK S.A., 06906 Sophia Cedex (FR)
(72) Inventeur: BENATO, Pierre, F-06330 Roquefort les Pins (FR)
(86) Numéro de dépôt international: PCT/FR2004/000777
(87) Numéro de publication internationale: WO 2004/088582

(56) Documents cités:
- EP-A- 1 189 168
- WO-A-01/03188
- WO-A-01/95252
- FR-A- 2 782 821

## Description

### Domaine technique

La présente invention concerne les procédés de fabrication d'antennes de cartes à puce hybrides contact-sans contact ou de cartes à puce sans contact et concerne en particulier un procédé de fabrication de l'antenne d'une carte à puce sur un support thermoplastique et la carte à puce obtenue par ledit procédé.

### Etat de la technique

Les cartes à puce sans contact ou hybrides contact-sans contact sont munies principalement d'une antenne noyée dans la carte et d'un module électronique connecté à l'antenne. Ces cartes permettent l'échange d'informations avec l'extérieur par couplage électromagnétique à distance donc sans contact, entre son antenne et une deuxième antenne située dans le dispositif de lecture associé. Lorsqu'il s'agit d'une carte hybride, cet échange peut également se faire par transmission électrique de données entre les contacts affleurants du module électronique de la carte et les contacts d'une tête de lecture d'un dispositif de lecture dans lequel la carte est insérée. Ces cartes sont maintenant utilisées dans de très nombreux secteurs. Ainsi, dans le secteur des transports, elles servent de moyen d'accès au réseau de transport. C'est également le cas pour les cartes bancaires. Les cartes hybrides ou sans contact sont utilisées dans tous les types d'opérations de débit/crédit d'unités de compte, un exemple récent étant le porte-monnaie électronique. De nombreuses sociétés ont également développé des moyens d'identification de leur personnel par cartes à puce sans contact.

Le module électronique inséré dans la carte à puce hybride contact-sans contact ou sans contact sert à élaborer, stocker et traiter les informations. La connexion du module électronique et de l'antenne est un des problèmes majeurs de la réalisation de cartes à puce. En effet, les dimensions imposées par les normes usuelles des cartes à puce rendent leur fabrication délicate d'autant plus lorsqu'il s'agit d'insérer un module électronique et une antenne connectés ensemble.

La réalisation d'antennes par un procédé de sérigraphie d'encre conductrice a permis de diminuer de façon considérable les contraintes de fabrication. En effet, la sérigraphie de plusieurs antennes à la fois est réalisée par un ou plusieurs dépôts d'encre conductrice tel que de l'argent et rend cette première étape de fabrication des cartes à puce hybrides ou sans contact beaucoup plus rapide et moins coûteuse que les procédés utilisés précédemment. De plus, la réalisation d'une antenne sérigraphiée permet d'obtenir une très grande adhérence de l'antenne sur son support thermoplastique et ainsi de s'affranchir en partie du problème de détection des plots de l'antenne lors de l'étape de connexion du module et de l'antenne dans le cas des cartes à puce hybrides.

Malheureusement, les inconvénients de ce type d'antenne apparaissent lors de la deuxième étape de fabrication de la carte, qui consiste à laminer les différentes couches en matière plastique constitutives de la carte de part et d'autre du support d'antenne. Le fluage de matière étant très important lors de l'étape de lamination du fait de la pression et de la température élevées, le facteur de forme de l'antenne n'est pas conservé. En effet, l'encre conductrice constituant l'antenne contient seulement 15% de liant, ce qui lui confère une tenue mécanique insuffisante dans des conditions de température et de pression de l'ordre de 180°C et 280 Bars. Il apparaît alors des variations des paramètres électriques (inductance et résistance) de l'antenne et par conséquent des dysfonctionnements. En outre, il n'est pas rare d'observer des coupures d'antenne aux endroits où les contraintes de cisaillement sont fortes. C'est le cas notamment dans les angles ou au niveau des pontages électriques.

Le document WO 01/95252 décrit une carte à puce sans contact comprenant une antenne sur un support, l'antenne pouvant être réalisée par impression d'encre conductive. L'invention décrite concerne en particulier une bande de carte à puce composée d'une bande de support (1) dont la température de ramollissement est d'au moins 110 °C, de préférence, 180 °C, et d'une bande de couverture dont la température de ramollissement n'est pas supérieure à 110 °C. Elle concerne également un procédé servant à fabriquer cette bande de carte à puce. Ce procédé consiste à fabriquer cette bande de carte à puce sous forme de bande continue composée d' une bande de support et d' une bande de couverture fixées l'une à l'autre.

Le document EP 1 189 168 décrit également une carte à puce sans contact comprenant une antenne sur un support, l'antenne et la puce étant supportées par un matériau biodégradable.

### Exposé de l'invention

C'est pourquoi le but de l'invention est de fournir une carte à puce hybride contact-sans contact ou sans contact dont l'antenne sérigraphiée sur un support thermoplastique ne subit aucun dommage lors des étapes de fabrication de la carte et notamment lors de l'étape de lamination.

L'objet de l'invention est donc un procédé de fabrication d'antenne de carte à puce hybride contact-sans contact ou sans contact selon la revendication 1 et une carte à puce selon la revendication 7.

### Description brève des figures

Les buts, objets et caractéristiques de l'invention apparaîtront plus clairement à la lecture de la description qui suit faite en référence aux dessins dans lesquels :
la figure 1 représente l'étape préliminaire de dépôt de résine sur le support d'antenne d'une carte à puce hybride contact-sans contact,
la figure 2 représente l'antenne sérigraphiée sur son support d'une carte à puce hybride contact-sans contact,
les figures 3a et 3b représentent respectivement une coupe de la carte à puce hybride contact-sans contact après la première et la deuxième étapes de lamination,
la figure 3c représente une coupe d'une carte à puce hybride contact-sans contact avec son module,
la figure 4 représente l'étape préliminaire de dépôt de résine sur le support d'antenne d'une carte à puce sans contact,
la figure 5 représente l'antenne sérigraphiée sur le support d'une carte à puce sans contact, et
les figures 6a, 6b et 6c représentent respectivement une coupe de la carte à puce sans contact après les étapes de dépôt du module, de première et de deuxième étapes de lamination.

### Description détaillée de l'invention

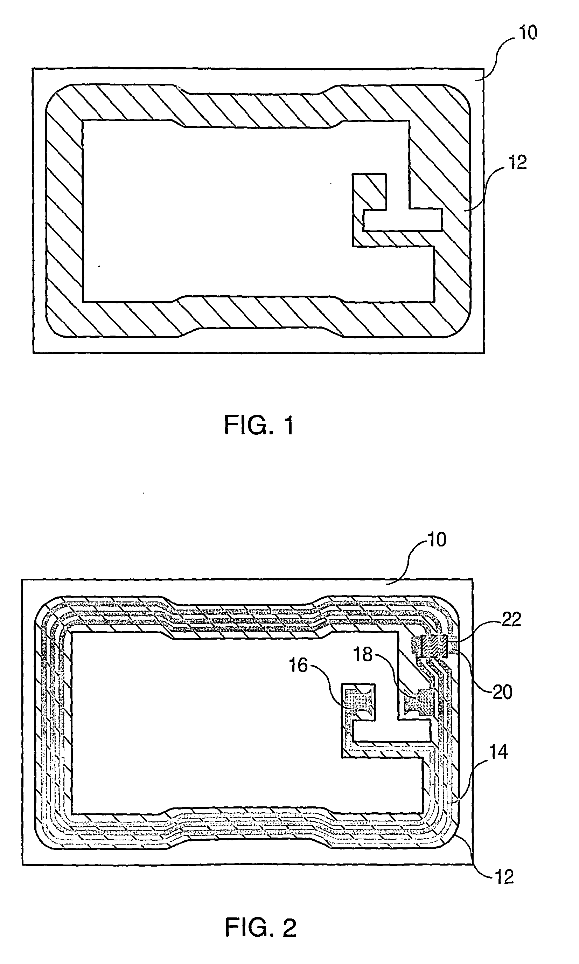

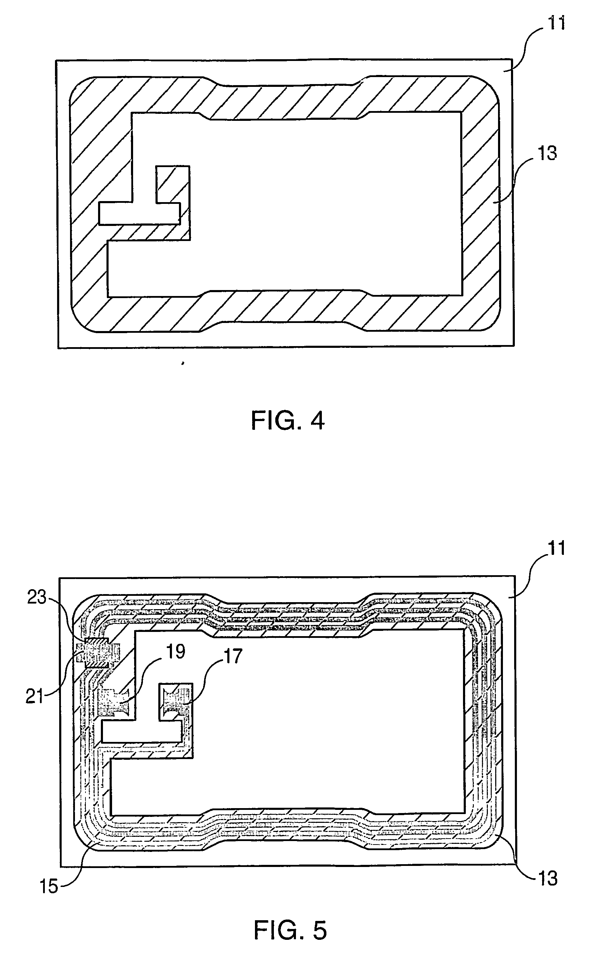

Selon la figure 1, une résine est déposée sur le support d'antenne 10 en matière thermoplastique d'une carte à puce hybride contact-sans contact sur une zone 12 correspondant à l'emplacement de l'antenne et des plots de connexion de l'antenne avec le module. Les détails de la forme de la zone 12 ne constituent pas une limitation de l'invention, la principale contrainte étant que la zone 12 délimite l'emplacement où l'encre conductrice constituant les spires et les plots de connexion de l'antenne, sera ensuite imprimée. La zone 12 est de préférence légèrement supérieure à l'empreinte de l'antenne comme on peut le voir sur les figures 2 et 5 suivantes. L'épaisseur de la couche de résine déposée est de l'ordre de 5 µm.

Selon un mode de réalisation préféré d'une antenne de carte à puce hybride contact-sans contact illustré sur la figure 2, l'antenne est sérigraphiée sur la zone 12 du support d'antenne 10 en plusieurs passages et à rebours par rapport au procédé classique de sérigraphie. En effet, le premier passage consiste à sérigraphier les deux plots de connexion 16 et 18 de l'antenne au module et le pont électrique 20, appelé communément " cross-over ". Le deuxième passage consiste à sérigraphier une bande isolante 22 superposée au cross-over. Le troisième passage de sérigraphie consiste à sérigraphier les spires de l'antenne 14. Un quatrième passage est prévue pour rajouter une couche d'encre sur les plots de connexion 16 et 18. L'épaisseur de la couche d'encre conductrice est de l'ordre de 50 µm. Les spires de l'antenne 14 relient le plot de connexion 18 situé à une des extrémités du cross-over 20 et l'autre extrémité du cross-over 20 où se trouve le plot de connexion 16. L'encre constituant la totalité de l'antenne est une encre conductrice du type encre conductrice polymère, chargée en éléments conducteurs tels que l'argent, le cuivre ou le carbone. Le support d'antenne 10 subit ensuite un traitement thermique afin de cuire l'encre.

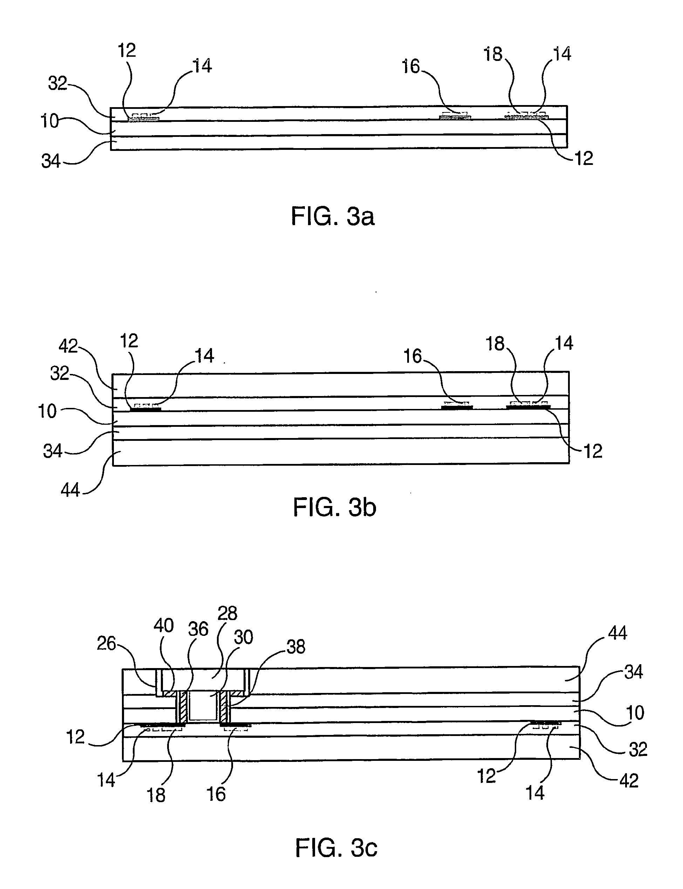

L'étape suivante consiste à laminer deux couches ou feuilles de matière thermoplastique sur le support d'antenne comme illustré sur la figure 3a. Cette première étape de lamination consiste à souder par pressage à chaud de chaque côté du support d'antenne 10 deux couches de thermoplastique homogènes 32 et 34 d'épaisseur 100 µm. La température et la pression atteintes sont respectivement de l'ordre de 180°C et 280 bars. Lors de cette première étape de lamination, la température doit être suffisante pour que la matière composant les feuilles 32 et 34 se ramollisse et flue totalement de manière à emprisonner les reliefs du support d'antenne tels que ceux dus aux spires et aux plots de l'antenne. Ainsi, lors de la lamination, le support d'antenne 10 est emprisonné dans la masse du thermoplastique des couches 32 et 34.

La deuxième phase de lamination des différentes couches constitutives de la carte consiste à laminer deux corps de carte de chaque côté du support d'antenne obtenu après la première étape de lamination en référence à la figure 3b. Cette seconde étape, réalisée après un certain temps correspondant au temps nécessaire pour que les couches de thermoplastique 32 et 34 soient solidifiées, consiste à venir souder deux couches 42 et 44 de thermoplastique, d'épaisseur égale d'environ 260 µm, constituant les corps de carte sur les couches de thermoplastiques 32 et 34, par pressage à chaud. Les deux corps de carte 42 et 44 ont été préalablement imprimés à l'aide du graphisme personnalisé de la carte. Les température et pression nécessaires pour cette étape de lamination sont de l'ordre respectivement de 120°C et 150 bars.

Les deux étapes de lamination décrites précédemment pourraient être remplacées par une seule étape de lamination consistant à souder, par pressage à chaud, de chaque côté du support d'antenne au moins deux couches de thermoplastique, correspondant par exemple aux couches 32 et 42 d'un côté et 34 et 44 de l'autre et constituant les deux corps de carte, sans pour autant sortir du cadre de l'invention.

La carte obtenue après une ou plusieurs étapes de lamination est donc constituée d'un support 10 et de deux corps de carte situés de part et d'autre du support, chaque corps de carte étant constitué d'au moins une couche de thermoplastique et de préférence d'au moins deux couches de thermoplastiques 32 et 42 d'un côté du support et 34 et 44 de l'autre.

En référence à la figure 3c, la dernière étape de fabrication de la carte hybride contact-sans contact est la mise en place du module. Une cavité 26 destinée à recevoir le module constitué de la puce 30 et du circuit double face 28 est fraisé dans un des corps de la carte. Le fraisage permet également de dégager les plots de connexion 16 et 18 de l'antenne avec le module. Le fraisage est réalisé dans le corps de carte qui est opposé à la face du support d'antenne portant l'impression sérigraphique, c'est à dire dans le corps de carte qui est en contact avec la face du support ne portant pas la sérigraphie de l'antenne. Ainsi, lors du fraisage, le support d'antenne est fraisé avant l'encre.

L'installation du module se fait par collage. Deux colles différentes sont utilisées. Deux plots de colle conductrices 36 et 38 permettent de connecter le module aux plots de l'antenne. Un anneau de colle 40 telle qu'une colle cyanoacrylate scelle le pourtour du module à la carte.

Le procédé selon l'invention, présente l'avantage de faciliter la détection de l'antenne lors de l'étape de fraisage qui consiste à mettre à jour les plots de connexion de l'antenne afin de connecter le module électronique. En effet, les plots de connexion de l'antenne sérigraphiée pouvant être entamés presque en totalité lors du fraisage de la cavité ne risquent pas pour autant de se désolidariser de leur support.

Selon un mode de réalisation préféré d'une antenne de carte à puce sans contact illustré sur la figure 4, une résine est déposée sur le support d'antenne 11 en thermoplastique d'une carte à puce sans contact sur la zone 13 correspondant à l'emplacement de l'antenne et des plots de connexion de l'antenne avec le module. La zone de résine 13 d'une carte sans contact pure est inversée par rapport à la zone de résine 12 d'une carte à puce hybride contact-sans contact. Cette particularité est inhérente aux étapes ultérieures de fabrication de la carte sans contact. Ainsi, la seconde étape du procédé de fabrication d'une antenne de carte à puce sans contact sur son support qui consiste à sérigraphier l'antenne par plusieurs passages d'encre conductrice n'est pas réalisée dans le même ordre que pour l'étape de fabrication d'une antenne de cartes à puce hybrides contact-sans contact. La caractéristique essentielle du procédé des modes de réalisation de l'invention étant que l'antenne est fabriquée sur la zone 12 ou 13 où a été déposée préalablement une résine, cette caractéristique est présente dans la fabrication de support d'antenne selon l'invention et ce, quel que soit l'usage ultérieur de la carte.

Selon un mode de réalisation préféré d'une antenne de carte à puce sans contact illustré sur la figure 5, l'antenne est réalisée par sérigraphie d'encre conductrice en plusieurs passages. Le premier passage consiste à sérigraphier les spires 15 de l'antenne et les deux plots de connexion 17 et 19 de l'antenne. Le deuxième passage consiste à sérigraphier une bande isolante 23 pour permettre le croisement des spires de l'antenne sans contact électrique. Le troisième passage consiste à sérigraphier le pont électrique ou cross-over 21. Un quatrième passage est prévu pour rajouter une couche d'encre sur les plots de connexion 17 et 19. Les spires 15 de l'antenne relient le plot de connexion 19 à une des extrémités du cross-over 21 et l' autre extrémité du cross over 21 jusqu'au plot de connexion 17.

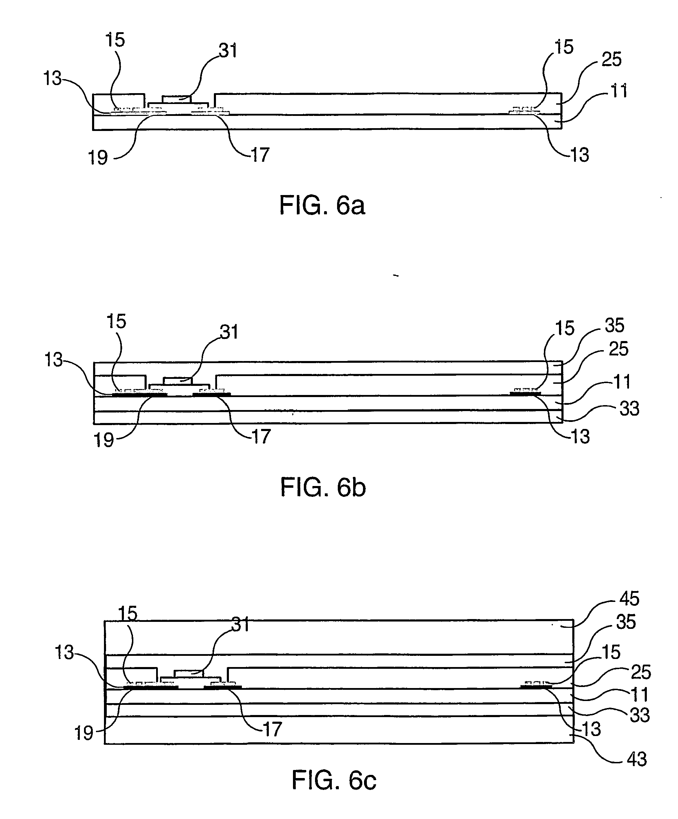

Selon la figure 6a, le module 31 contenant la puce est déposé à l'envers de façon à ce que les connexions de la puce soient en contact avec les plots de connexion 17 et 19 de l'antenne. Une feuille 25 de thermoplastique perforée est placée sur le support d'antenne 11 de façon à ce que le module 31 soit en face de l'ouverture pratiquée préalablement dans la feuille 25 et de façon à éviter les surépaisseurs dues au module.

Comme pour les étapes de lamination des différentes couches constitutives des corps de carte d'une carte à puce hybride contact-sans contact, la première étape de lamination d'une carte à puce sans contact est illustrée sur la figure 6b. Cette première étape de lamination consiste à souder par pressage à chaud deux couches de thermoplastique homogènes de part et d'autre du support d'antenne 11, une couche 35 sur la couche de thermoplastique 25 et une couche 33 sur la face du support d'antenne 11 ne portant pas l'antenne. Lors de cette première étape de lamination, la température doit être suffisante pour que la matière composant les couches 25, 33 et 35 se ramollisse et flue totalement de manière à emprisonner le module 31 et l'antenne. Ainsi, lors de la lamination, le support d'antenne 11 est emprisonné dans la masse du thermoplastique des couches 25, 33 et 35.

La deuxième phase de lamination des différentes couches constitutives de la carte consiste à laminer deux corps de carte de chaque côté du support d'antenne obtenu après la première étape de lamination en référence à la figure 6b. Cette seconde étape, consiste à venir souder deux couches 43 et 45 de thermoplastique, constituant les corps de carte sur les couches de thermoplastiques 33 et 35, par pressage à chaud. Les deux corps de carte 43 et 45 ont été préalablement imprimés, du graphisme personnalisé de la carte.

Les deux étapes de lamination décrites précédemment pourrait être remplacées par une seule étape de lamination consistant à souder, par pressage à chaud, de chaque côté du support d'antenne au moins deux couches de thermoplastique, correspondant par exemple aux couches 35 et 45 d'un côté et 33 et 43 de l'autre et constituant les deux corps de carte, sans pour autant sortir du cadre de l'invention.

Le thermoplastique utilisé pour toutes les couches constitutives des cartes à puce et mentionnées dans ce document est préférentiellement du polychlorure de vinyle (PVC), mais peut être aussi du polyester (PET, PETG), du polypropylène (PP), du polycarbonate (PC) ou de l'acrylonitrile-butadiène-styrène (ABS).

La résine déposée sur les zones 12 et 13 du support d'antenne et préalablement à l'impression de l'antenne est utilisée pour ses propriétés aux température et pression de la première étape de lamination par rapport aux mêmes propriétés du support sur lequel elle est déposée. En particulier, la résine est utilisée parce qu'elle est stable dimensionnellement et parce qu'elle reste dure durant la première étape de lamination par rapport à la matière plastique sur laquelle elle est déposée. En effet, à 180°C et à 280 Bars, la matière plastique du support d'antenne flue et donc ramollit tandis que la résine est stable. Ainsi, le circuit composé de l'antenne, des plots de connexion et éventuellement de la puce dans le cas d'une carte à puce sans contact, fixé sur le support, se trouve sur un socle stable et dur formé par la résine. Durant la lamination, c'est l'intégralité de ce socle qui est mobile par rapport à son support et de ce fait, le facteur de forme de l'antenne est conservé car celle-ci n'est pas prise en cisaillement entre les deux couches de thermoplastique inférieure et supérieure et donc ne se fracture pas. La résine confère au circuit une rigidité d'ensemble pendant toutes les étapes de la fabrication de la carte car elle résiste sans se déformer aux températures et pression des différentes étapes de fabrication de la carte à puce. Le dépôt de résine sur les zones 12 ou 13 est réalisé selon un procédé rapide et rentable tel qu'une impression offset, sérigraphique, héliographique ou flexographique. Pour cela et pour des soucis de coûts, la résine utilisée peut être de la colophane ou une résine du type époxy acrylate. Ces résines sont utilisées dans la fabrication des encres. Les encres sont constituées à environ 70% de vernis, 20% de pigments et 10% d'additifs tels que cire, siccatifs, diluants. Le vernis contient des huiles végétales, des diluants pétroliers et des résines. Le procédé selon l'invention est réalisé avec le dépôt d'une matière constituée majoritairement de résine. De façon avantageuse, le procédé est réalisé avec une encre de type offset composée majoritairement d'une résine du type époxy acrylate ou composée majoritairement d'une résine du type colophane.

## Revendications

1. Procédé de fabrication d'une antenne de carte à puce hybride contact-sans contact ou sans contact, la carte comprenant un support (10 ou 11) sur lequel est réalisée l'antenne, deux corps de carte de chaque côté dudit support, chacun desdits corps de carte étant constitué d'au moins une couche de thermoplastique, et une puce ou un module connecté à l'antenne,
**caractérisé en ce qu'**il comporte les étapes suivante :
- une étape de dépôt d'une couche d'un matériau composé majoritairement de résine sur une zone prédéterminée (12 ou 13) sur ledit support d'antenne, ladite zone correspondant à l'empreinte de l'antenne ou étant légèrement supérieure à celle-ci,
- une étape de fabrication de l'antenne consistant à sérigraphier des spires (14 ou 15) et deux plots de connexion (16, 18 ou 17, 19) d'encre conductrice sur ladite zone (12 ou 13) réalisée préalablement sur ledit support et à faire subir un traitement thermique audit support afin de cuire ladite encre.

2. Procédé de fabrication selon la revendication 1, dans lequel ladite couche de matériau est une encre de type offset.

3. Procédé de fabrication selon la revendication 2, dans lequel ladite encre est composée majoritairement d'une résine de type colophane.

4. Procédé de fabrication selon la revendication 2, dans lequel ladite encre est composée majoritairement d'une résine de type époxy cyanoacrylate.

5. Procédé de fabrication selon l'une des revendications 1 à 4 **caractérisé en ce que** lesdits deux corps de carte sont laminés de chaque côté dudit support (10 ou 11) selon deux étapes, une première étape de lamination consistant à souder de chaque côté dudit support d'antenne (10 ou 11) deux feuilles de thermoplastique homogènes (32, 34 ou 33, 35) par pressage à une température suffisante pour que la matière composant les feuilles se ramollisse et flue totalement de manière à faire disparaître toutes différences d'épaisseur du support, et
une seconde étape de lamination réalisée après un temps correspondant au temps nécessaire pour que lesdites feuilles de thermoplastique (32, 34 ou 33, 35) soient solidifiées, ladite deuxième étape consistant à souder sur le support d'antenne d'épaisseur constante obtenu après la première étape de lamination deux couches en matière plastique (42, 44 ou 43, 45), constituant les corps de carte, par pressage à chaud.

6. Procédé de fabrication selon l'une des revendications 1 à 4, **caractérisé en ce que** lesdits deux corps de carte sont laminés de chaque côté dudit support (10 ou 11) selon une seule étape de lamination consistant à souder de chaque côté dudit support d'antenne (10 ou 11) au moins deux couches de thermoplastique.

7. Carte à puce hybride contact-sans contact ou sans contact comprenant une antenne sur un support (10 ou 11), ladite antenne étant composée d'au moins une spire d'encre conductrice sérigraphiée sur ledit support d'antenne, deux corps de carte de chaque côté dudit support, chacun desdits corps de carte étant constitué d'au moins une couche de matière plastique, et une puce ou un module connecté à l'antenne
**caractérisé en ce que** l'antenne composée des spires (14 ou 15) et de deux plots de connexion (16, 18 ou 17, 19) d'encre conductrice est sérigraphiée sur une zone (12 ou 13) du support d'antenne, ladite zone correspondant à l'empreinte de l'antenne ou étant légèrement supérieure à celle-ci et sur laquelle a été déposé un matériau composé majoritairement de résine.

8. Carte à puce selon la revendication 7, dans lequel ladite couche de matériau est une encre de type offset.

9. Carte à puce selon la revendication 8, dans lequel ladite encre est composée majoritairement d'une résine de type colophane.

10. Carte à puce selon la revendication 8, dans lequel ladite encre est composée majoritairement d'une résine de type époxy cyanoacrylate.

## Claims

1. A method for manufacturing an antenna of a hybrid contact-contactless or contactless smart card, said smart card that includes a support (10 or 11) on which the antenna is made, two card bodies on each side of said support, each of said card bodies consisting of at least one thermoplastic layer, and a chip or a module connected to the antenna.
**characterized in that** it includes the steps of:
- depositing a layer of a material mainly consisting g of resin on a predetermined zone (12 or 13) on said antenna support, said zone corresponding to the imprint of the antenna or being slightly larger than it,
- manufacturing the antenna, consisting in screen printing turns (14 or 15) and two connection pads (16, 18 or 17, 19) of electrically conductive ink on said zone (12 or 13) prepared beforehand on said support and subjecting said support to a heat treatment in order to bake said ink.

2. The manufacturing method according to claim 1, in which said material layer is an offset type ink.

3. The manufacturing method according to claim 2, in which said ink mainly consists of rosin.

4. The manufacturing method according to claim 2, in which said ink mainly consists of epoxy cyanoacrylate type resin.

5. The manufacturing method according to any one of claims 1 to 4 **characterized in that** said two card bodies are laminated on each side of said support (10 or 11) in two steps, the first lamination step consisting in welding on each side of said antenna support (10 or 11) two homogenous thermoplastic sheets (32, 34 or 33, 35) by hot press moulding at a temperature sufficient for the material that makes up the sheets to soften and to flow completely so as to eliminate all differences in thickness of the support, and
a second lamination step performed after a duration corresponding to the time required for said thermoplastic sheets (32, 34 or 33, 35) to solidify, said second step consisting in welding on the antenna support of constant thickness obtained after the first lamination step two layers of plastic material (42, 44 or 43, 45), constituting the body of the card, by hot press moulding.

6. The manufacturing method according to any one of claims 1 to 4, **characterized in that** said two card bodies are laminated on each side of said support (10 or 11) according to a single lamination step consisting in welding on each side of said antenna support (10 or 11) at least two thermoplastic layers.

7. A hybrid contact-contactless or contactless smart card featuring an antenna on a support (10 or 11), said antenna consisting of at least one turn of electrically conductive ink screen printed on said antenna support, two card bodies on each side of said support, each of said card bodies consisting of at least one layer of plastic material, and a chip or module connected to the antenna
**characterized in that** the antenna consisting of turns (14 or 15) and two connection pads (16, 18 or 17, 19) of conductive ink is screen printed on a zone (12 or 13) of the antenna support, said zone corresponding to the imprint of the antenna or being slightly larger than the latter and on which a material consisting mainly of resin has been deposited.

8. The smart card according to claim 7, in which said material layer is an offset type ink.

9. The smart card according to claim 8, in which said ink mainly consists of rosin.

10. The smart card according to claim 8, in which said ink mainly consists of epoxy cyanoacrylate type resin.

## Patentansprüche

1. Verfahren zur Herstellung einer Antenne einer kontaktbehafteten-kontaktlosen oder kontaktlosen hybriden Chipkarte, wobei die Karte einen Träger (10 oder 11), auf dem die Antenne hergestellt wird, zwei Kartenkörper auf beiden Seite des Trägers, wobei jeder der Kartenkörper aus mindestens einer Schicht eines Thermoplasts besteht, und einen mit der Antenne verbundenen Chip oder Modul aufweist,
**dadurch gekennzeichnet, dass** es die folgenden Schritte aufweist:
- einen Schritt des Aufbringens eines zum größten Teil aus Harz bestehenden Materials auf eine vorbestimmte Zone (12 oder 13) auf dem Antennenträger, wobei die Zone dem Eindruck der Antenne entspricht oder geringfügig über diesem liegt,
- einen Schritt der Herstellung der Antenne, der darin besteht, durch Siebdruck Windungen (14 oder 15) und zwei Anschlusskontakte (16, 18 oder 17, 19) aus leitender Farbe auf der Zone (12 oder 13} herzustellen, die vorher auf dem Träger realisiert wird, und den Träger einer Wärmebehandlung zu unterziehen, um die Farbe zu brennen.

2. Herstellungsverfahren nach Anspruch 1, bei dem die Materialschicht eine Farbe vom Typ Offset ist.

3. Herstellungsverfahren nach Anspruch 2, bei dem die Farbe größtenteils aus einem Harz vom Typ Kolophonium besteht.

4. Herstellungsverfahren nach Anspruch 2, bei dem die Farbe größtenteils aus einem Harz vom Typ Cyanacrylat-Epoxidharz besteht.

5. Herstellungsverfahren nach einem der Ansprüche 1 bis 4, **dadurch gekennzeichnet, dass** die zwei Kartenkörper auf jede Seite des Trägers (10 oder 11) in zwei Schritten aufgewalzt werden, einem ersten Walzschritt, der darin besteht, auf jede Seite des Antennenträgers (10 oder 11) zwei homogene Thermoplastfolien (32, 34 oder 33, 35) durch Pressen bei einer ausreichenden Temperatur zu schweißen, damit der die Folien bildende Stoff vollständig aufweicht und fließt, um alle Dickenunterschiede des Trägers verschwinden zu lassen, und
einen zweiten Walzschritt, der nach einer Zeit durchgeführt wird, die der zur Verfestigung der Thermoplastfolien (32, 34 oder 33, 35) notwendigen Zeit entspricht, wobei der zweite Schritt darin besteht, auf den nach dem ersten Walzschritt erhaltenen Antennenträger konstanter Dicke durch Warmpressen zwei Schichten aus Kunststoff (42, 44 oder 43, 45) zu schweißen, die die Kartenkörper bilden.

6. Herstellungsverfahren nach einem der Ansprüche 1 bis 4, **dadurch gekennzeichnet, dass** die zwei Kartenkörper auf beide Seiten des Trägers (10 oder 11) gemäß einem einzigen Walzschritt aufgewalzt werden, der darin besteht, auf jede Seite des Antennenträgers (10 oder 11) mindestens zwei Thermoplastschichten zu schweißen.

7. Hybride kontaktbehaftete-kontaktlose oder kontaktlose Chipkarte, die eine Antenne auf einem Träger (10 oder 11), wobei die Antenne aus mindestens einer Windung aus leitender Farbe besteht, die durch Siebdruck auf den Antennenträger aufgebracht wird, zwei Kartenkörper auf jeder Seite des Trägers, wobei jeder der Kartenkörper aus mindestens einer Kunststoffschicht besteht, und einen mit der Antenne verbundenen Chip oder Modul aufweist,
**dadurch gekennzeichnet, dass** die aus den Windungen (14 oder 15) und aus zwei Anschlusskontakten (16, 18 oder 17, 19) aus leitender Farbe bestehende Antenne durch Siebdruck auf eine Zone (12 oder 13) des Antennenträgers aufgebracht wird, wobei die Zone dem Eindruck der Antenne entspricht oder geringfügig über diesem liegt, und auf die ein größtenteils aus Harz bestehendes Material aufgebracht wurde.

8. Chipkarte nach Anspruch 7, bei der die Materialschicht eine Farbe vom Offset-Typ ist.

9. Chipkarte nach Anspruch 8, bei der die Farbe größtenteils aus einem Harz vom Typ Kolophonium besteht.

10. Chipkarte nach Anspruch 8, bei der die Farbe größtenteils aus einem Harz vom Typ Cyanacrylat-Epoxidharz besteht.
